# EUROPÄISCHE PATENTSCHRIFT

(11) **EP 3 422 628 B1**
(45) Veröffentlichungstag und Bekanntmachung des Hinweises auf die Patenterteilung: **07.04.2021**
(21) Anmeldenummer: 17178641.1
(22) Anmeldetag: 29.06.2017
(51) Int. Cl.: H04L 9/08, H04L 9/32, H04L 9/00

(54) **VERFAHREN, SICHERHEITSEINRICHTUNG UND SICHERHEITSSYSTEM**
METHOD, SAFETY DEVICE AND SAFETY SYSTEM
PROCÉDÉ, DISPOSITIF DE SÉCURITÉ ET SYSTÈME DE SÉCURITÉ

(43) Veröffentlichungstag der Anmeldung: 02.01.2019
(73) Patentinhaber: Siemens Aktiengesellschaft, 80333 München (DE)
(72) Erfinder: Falk, Rainer, 85586 Poing (DE)

(56) Entgegenhaltungen:
- DE-A1-102013 205 051
- DE-A1-102014 102 168
- US-A1- 2006 020 811

## Beschreibung

Die vorliegende Erfindung betrifft ein Verfahren und eine Sicherheitseinrichtung zum Erzeugen eines gerätespezifischen Gerätezertifikats für ein Gerät sowie ein Sicherheitssystem.

Um sicher in einem Kommunikationsnetzwerk mit einem Kommunikationspartner kommunizieren zu können, muss ein elektronisches Gerät, insbesondere ein Feldgerät, Steuergerät oder Internetder-Dinge-Gerät (IdD-Gerät) sich häufig bei dem Kommunikationspartner authentisieren. Durch die Authentisierung kann der Kommunikationspartner sicherstellen, dass eine Nachricht wirklich authentisch ist, also tatsächlich von dem angegebenen Gerät stammt. Das Gerät kann zum Beispiel anhand eines digital signierten Gerätezertifikats, welches gerätespezifische Information sowie einen öffentlichen Schlüssel des Geräts enthält, durch den Kommunikationspartner authentisiert werden. Das digitale Gerätezertifikat wird beispielsweise bei der Herstellung oder Inbetriebnahme des Geräts erstellt.

Zur Erstellung des Gerätezertifikats kann eine Public-Key-Infrastruktur (PKI) verwendet werden, welche anhand einer Zertifizierungsstelle, engl. "Certification Authority" (CA), eine Zertifikatsanfrage von dem Gerät erhält und ein digital signiertes Gerätezertifikat erzeugt. Das erstellte Gerätezertifikat muss dann über eine PKI-Schnittstelle auf das Gerät übertragen werden.

Weiterhin ist bekannt, ein Sicherheitsmodul mit einem sicherheitsmodulspezifischen Sicherheitsmodulzertifikat in ein Gerät einzubetten bzw. zu integrieren. Jedoch muss auch dabei zuerst ein Sicherheitsmodulzertifikat erstellt und über eine Schnittstelle an das Sicherheitsmodul übertragen werden. Dadurch kann zwar eine Authentisierung des Sicherheitsmoduls erfolgen, aber nicht des Geräts.

Hingewiesen wird auf das Dokument DE 10 2013 205051 A1, welches ein Automatisierungsgerät, ein System und ein Verfahren zum Aktualisieren eines digitalen Geräte-Zertifikats eines Automatisierungsgeräts einer Automatisierungsanlage beschreibt, bei dem sich das Automatisierungsgerät mittels mindestens eines Geräte-Zertifikats gegenüber einem Authentisierungspartner authentisiert. Das Geräte-Zertifikat ist dabei mit gerätespezifische Konfigurationsdaten des Automatisierungsgeräts verbunden. Nach einer Änderung der Konfiguration des Automatisierungsgeräts wird vom Automatisierungsgerät ein aktualisiertes Geräte-Zertifikat mit gerätespezifischen Konfigurationsdaten entsprechend der geänderten Konfiguration des Automatisierungsgeräts ermittelt und nachfolgend zum Authentisieren verwendet.

Weiterhin wird auf das Dokument US 2006/020811 A1 hingewiesen, welches ein OTPK-(one time private key)Software-Modul in einer Signiereinheit zeigt. Das OTPK-Modul erzeugt ein asymmetrisches Schlüsselpaar, wobei nach dessen Verwendung der private Schlüssel, welcher Teil des Schlüsselpaars ist, unwiederbringlich gelöscht wird, so dass er nicht noch einmal verwendet oder kopiert werden kann.

Weiterhin wird auf das Dokument DE 10 2014 102168 A1 hingeweisen, welches die Validitätsüberprüfung eines Gerätezertifikats behandelt.

Vor diesem Hintergrund besteht eine Aufgabe der vorliegenden Erfindung darin, ein verbessertes Verfahren zum Erzeugen eines gerätespezifischen Gerätezertifikats für ein Gerät bereitzustellen. Weitere Aufgaben bestehen darin, eine verbesserte Sicherheitseinrichtung zum Erzeugen eines gerätespezifischen Gerätezertifikats für ein Gerät sowie ein verbessertes Sicherheitssystem zu schaffen.

Demgemäß wird ein Verfahren zum Erzeugen eines gerätespezifischen Gerätezertifikats für ein Gerät gemäß Anspruch 1 vorgeschlagen.

Gemäß einer Ausführungsform wird ferner eine Sicherheitseinrichtung vorgeschlagen, welche eingerichtet ist, ein gerätespezifisches Gerätezertifikat für ein mit der Sicherheitseinrichtung gekoppeltes Gerät zu erzeugen gemäß Anspruch 10.

Gemäß einer weiteren Ausführungsform ist die Sicherheitseinrichtung dazu geeignet, das zuvor oder im Folgenden beschriebene Verfahren durchzuführen.

Die Sicherheitseinrichtung ist insbesondere ein physikalisches Hardware-Sicherheitsmodul, wie zum Beispiel ein Kryptocontroller, ein Secure Element (SE), ein Hardware-Vertrauensanker oder ein Trusted-Platform-Modul (TPM). Die Sicherheitseinrichtung kann separat von dem Gerät hergestellt werden, und zum Erstellen des Gerätezertifikats, zum Beispiel bei der Fertigung des Geräts, mit dem Gerät gekoppelt werden. Die Kopplung der Sicherheitseinrichtung mit dem Gerät kann über ein Kabel und/oder kabellos erfolgen. Die Sicherheitseinrichtung kann hierzu über eine Schnittstelle mit dem Gerät verbunden sein. Die Sicherheitseinrichtung kann auch in dem Gerät integriert sein. Das Gerät und die Sicherheitseinrichtung können derart miteinander gekoppelt sein, dass sie miteinander Daten austauschen können. Die Sicherheitseinrichtung ist insbesondere von dem Gerät entfernbar.

Die Sicherheitseinrichtung vollzieht insbesondere die Funktionalität einer Zertifizierungsstelle. Sie kann verwendet werden, um für das Gerät ein gerätespezifisches, insbesondere einzigartiges digitales Gerätezertifikat zu erstellen. Bei dem Gerätezertifikat kann es sich um ein digitales Zertifikat nach dem kryptographischen Standard X.509 handeln. Zum Beispiel kann sich das Gerät mit dem Gerätezertifikat bei anderen Geräten in einem Netzwerk authentisieren, um mit diesen anderen Geräten Daten auszutauschen. Anhand des Gerätezertifikats kann das Gerät identifiziert werden. Unter Gerät sind insbesondere elektronische Geräte, zum Beispiel Feldgeräte, Steuergeräte und IdD-Geräte zu verstehen.

Nach dem Koppeln der Sicherheitseinrichtung mit dem Gerät kann die Sicherheitseinrichtung das Erstellen des Gerätezertifikats vornehmen. Hierbei kann die Sicherheitseinrichtung die gerätespezifische Identifizierungsinformation berücksichtigen, welche das Gerät insbesondere unverwechselbar charakterisiert. Zum Beispiel kann die gerätespezifische Identifizierungsinformation bei dem Erstellen des Gerätezertifikats in das Gerätezertifikat eincodiert werden. Durch die Berücksichtigung der gerätespezifischen Identifizierungsinformation, wie z.B. Hersteller, Gerätetyp, Hardware-Version, Firmware-Version und Seriennummer, beim Erstellen des Gerätezertifikats kann dem Gerätezertifikat seine Gerätespezifität verliehen werden. Verschiedene Geräte können dadurch unterschiedliche Gerätezertifikate erhalten. Insbesondere eignen sich die Gerätezertifikate daher zur Authentisierung der Geräte.

Das Erzeugen des Gerätezertifikats kann eine Vorbereitung eines Gerätezertifikatsentwurfs durch die Sicherheitseinrichtung umfassen. Der Gerätezertifikatsentwurf kann bereits alle Elemente eines fertig erstellten Gerätezertifikats enthalten, bei dem nur noch die digitale Signatur fehlt. Durch Signieren des Gerätezertifikatsentwurfs mit dem Signierschlüssel kann dann das Gerätezertifikat erstellt werden.

In einer Variante enthält der Gerätezertifikatsentwurfs eines oder mehrere Felder, z.B. z.B. Hersteller, Gerätetyp, Hardware-Version, Firmware-Version und Seriennummer, das oder die mit einem Wert zu belegen sind, bevor das Gerätezertifikat mit dem Signierschlüssel erstellbar ist.

Der Gerätezertifikatsentwurf kann in einer weiteren Variante Formatvorgaben (z.B. Länge, Zeichensatz) und zulässiger Wertebereiche für die zu belegenden Felder festlegen. Das Gerätezertifikat ist nur dann erstellbar, wenn alle auszufüllenden Felder mit einem Wert belegt sind, der den vorgegebenen Vorgaben gemäß dem Gerätezertifikatsentwurf entspricht.

In einer Weiteren Variante wird zumindest ein Feld, z.B. eine Geräteidentifizierungszeichenfolge (Gerätename), eine Geräteseriennummer, oder eine Zertifikatsseriennummer, mit einem zufällig bestimmten Wert automatisch belegt.

Der in der Sicherheitseinrichtung gespeicherte private Signierschlüssel ist insbesondere ein privater bzw. geheimer Signaturschlüssel, welcher nur ein einziges Mal verwendet werden kann. Insbesondere handelt es sich bei dem Signierschlüssel um einen kryptographischen Schlüssel. Er kann bereits bei der Herstellung der Sicherheitseinrichtung in der Sicherheitseinrichtung gespeichert werden.

Dadurch, dass der Signierschlüssel nur einmalig zum Signieren des Gerätezertifikats verwendbar ist, enthält die Sicherheitseinrichtung insbesondere die Funktionalität einer einmal-Zertifizierungsstelle, welche nur ein einziges Mal eine Gerätezertifikatsanfrage signieren kann und somit nur ein einziges Gerätezertifikat generieren kann. Eine einzige Sicherheitseinrichtung kann insbesondere nur ein einziges Gerätezertifikat ausstellen.

Die Sicherheitseinrichtung kann somit zum Beispiel auf einem beliebigen Gerät ein Gerätezertifikat erzeugen, ohne dass eine zentrale PKI benötigt wird. Insbesondere ist eine Anbindung des Geräts an eine PKI nicht erforderlich und das Gerät muss keine PKI-kompatible Schnittstelle aufweisen. Es ist auch nicht notwendig, während der Fertigung einen abgetrennten Sicherheitsbereich oder trainiertes Sicherheitspersonal zum Erstellen des Gerätezertifikats vorzusehen. Es kann also ein gerätespezifisches Gerätezertifikat mit geringen Aufwendungen erzeugt werden. Insbesondere ist es mit der Sicherheitseinrichtung auf einfache Weise möglich, ein sicheres Gerät mit einem Gerätezertifikat bereitzustellen.

Mit Hilfe der Sicherheitseinrichtung kann das Gerätezertifikat auch in einem Gerät, welches selbst keine Sicherheitsfunktionalität aufweist, erzeugt werden. Zum Erzeugen des gerätespezifischen Gerätezertifikats benötigt die Sicherheitseinrichtung lediglich die gerätespezifische Identifizierungsinformation. Somit kann ein beliebiges elektronisches Gerät mit einem Gerätezertifikat versehen werden. Mit dem Gerätezertifikat kann das Gerät zur sicheren Kommunikation mit anderen Geräten in einem Netzwerk authentisiert werden. Ferner können Geräte von unterschiedlichen Herstellern mit Sicherheitseinrichtungen bestückt werden, ohne dass die einzelnen Hersteller Sicherheitsanweisungen für das Erstellen von Gerätezertifikaten bekommen müssen und ohne dass die Geräte mit Sicherheitsmodulen ausstatten müssen.

Dadurch, dass der Signierschlüssel nur einmalig verwendbar ist, kann unterbunden werden, dass weitere Zertifikate mit dem Signierschlüssel signiert werden. Somit können insbesondere nach dem Erzeugen des einzigen gerätespezifischen Gerätezertifikats keine gefälschten Zertifikatsanfragen mit demselben Signierschlüssel signiert werden, wodurch keine gefälschten Gerätezertifikate erstellt werden können. Eine Authentizität des Zertifikats kann somit gewährleistet werden, wodurch die Sicherheit des mit dem Gerätezertifikat versehenen Geräts erhöht werden kann.

Mit der beschriebenen Sicherheitseinrichtung kann auf flexible Weise ein gerätespezifisches Gerätezertifikat für ein bestimmtes Gerät erzeugt werden. Die Sicherheitseinrichtung muss insbesondere nicht während der Herstellung vorkonfiguriert zu werden. Stattdessen genügt zur Erzeugung des Gerätezertifikats die gerätespezifische Identifizierungsinformation.

Das Gerätezertifikat kann in dem Gerät und/oder in der Sicherheitseinrichtung gespeichert werden. Es kann ferner über ein Netzwerk an ein anderes Gerät (Kommunikationspartner) gesendet werden. Der Kommunikationspartner kann mit dem Gerätezertifikat die Authentizität des Geräts überprüfen und eine sichere Datenübertragung zwischen dem Gerät und dem Kommunikationspartner einrichten. Unter eine sichere Datenübertragung ist insbesondere eine kryptographisch verschlüsselte Datenübertragung zu verstehen, welche im Folgenden noch näher beschrieben wird.

Gemäß einer weiteren Ausführungsform umfasst das Unterbinden des weiteren Zugriffs auf den privaten Signierschlüssel ein Löschen des privaten Signierschlüssels, ein Überschreiben des privaten Signierschlüssels, ein Verändern des privaten Signierschlüssels und/oder ein Sperren eines Zugriffs auf die Schlüsselspeichereinrichtung, in der der private Signierschlüssel gespeichert ist. Das Löschen des Signierschlüssels kann hier sowohl ein logisches als auch ein physisches bzw. sicheres Löschen des Signierschlüssels sein.

Gemäß einer weiteren Ausführungsform sind in mehreren verschiedenen Sicherheitseinrichtungen gespeicherte Signierschlüssel identisch.

Insbesondere werden die mehreren Sicherheitseinrichtungen bei ihrer Herstellung alle mit identischen Signierschlüsseln versehen, sodass die mehreren resultierenden Sicherheitseinrichtungen komplett identisch sind. Insbesondere ist es nicht notwendig, die jeweilige Sicherheitseinrichtung im Hinblick auf das Gerät, mit welchem die Sicherheitseinrichtung bei der Fertigung gekoppelt werden soll, vorzukonfigurieren. Beispielsweise ist eine Information darüber, mit welchem Gerät die Sicherheitseinrichtung später gekoppelt werden soll, bei der Herstellung der Sicherheitseinrichtung nicht erforderlich. Dadurch kann eine Herstellung der Sicherheitseinrichtung unabhängig von einer Herstellung des Geräts erfolgen.

Es muss auch nicht darauf geachtet werden, welche Identifizierungsinformation ein bestimmtes Gerät während der Fertigung oder Programmierung erhalten wird. Somit bedarf die Herstellung der Sicherheitseinrichtung keine Vorkonfiguration der Sicherheitseinrichtung, wodurch ein vereinfachter Arbeitsablauf für das Programmieren des Geräts, insbesondere für das Erstellen des Gerätezertifikats für das Gerät ermöglicht wird.

Obwohl mehrere Sicherheitseinrichtungen einen gleichen Signierschlüssel aufweisen, kann für jedes Gerät mit Hilfe der gerätespezifischen Identifizierungsinformation ein unterschiedliches Gerätezertifikat generiert werden.

Gemäß einer weiteren Ausführungsform umfasst das Verfahren ferner ein Empfangen der gerätespezifischen Identifizierungsinformation von dem Gerät oder über eine Schnittstelle des Geräts in der Sicherheitseinrichtung oder ein Erzeugen der gerätespezifischen Identifizierungsinformation in der Sicherheitseinrichtung.

Die gerätespezifische Identifizierungsinformation kann bereits vor dem Koppeln der Sicherheitseinrichtung mit dem Gerät in dem Gerät gespeichert sein, und dann nach dem Koppeln mit der Sicherheitseinrichtung an diese übertragen werden.

Die gerätespezifische Identifizierungsinformation kann von außerhalb des Geräts über die Schnittstelle an die Sicherheitseinrichtung übertragen werden. Beispielsweise kann ein Benutzer die gerätespezifische Identifizierungsinformation über die Schnittstelle bereitstellen.

Ferner kann die gerätespezifische Identifizierungsinformation intern durch die Sicherheitseinrichtung erzeugt werden, insbesondere zufällig erzeugt werden. Bei hinreichend großen Wertbereichen für die gerätespezifische Identifizierungsinformation, zum Beispiel bei einer achtstelligen gerätespezifischen Identifizierungsinformation, ist die Wahrscheinlichkeit vernachlässigbar, dass zwei unterschiedliche Geräte identische zufällige gerätespezifische Identifizierungsinformation erzeugen. Eine vernachlässigbare Wahrscheinlichkeit ist insbesondere geringer als 10⁻⁵. Es kann auch mit einer zufällig erzeugten gerätespezifischen Identifizierungsinformation ein eindeutiges gerätespezifisches Gerätezertifikat erzeugt werden.

Gemäß einer weiteren Ausführungsform umfasst das Verfahren ferner, in der Sicherheitseinrichtung:
Überprüfen, ob die gespeicherte Identifizierungsinformation in einem vorgegebenen Datenformat gespeichert ist; und
falls die gespeicherte Identifizierungsinformation in dem vorgegebenen Datenformat gespeichert ist, Erzeugen des gerätespezifischen Gerätezertifikats.

Insbesondere wird das Gerätezertifikat nur erzeugt, wenn bei der Überprüfung bestimmt wird, dass die gespeicherte gerätespezifische Identifizierungsinformation in dem vorgegebenen bzw. vorgespeicherte Datenformat vorliegt. Das vorgegebene Datenformat kann zum Beispiel einen zulässigen Wertebereich für die Identifizierungsinformation und/oder ein Format für die Identifizierungsinformation fordern und/oder bedingen. Das vorgegebene Datenformat kann bei einer Herstellung der Sicherheitseinrichtung definiert werden, oder durch einen Benutzer vorgegeben werden.

Gemäß einer weiteren Ausführungsform umfasst das Verfahren ferner, in der Sicherheitseinrichtung:
Empfangen einer Freischaltinformation;
Überprüfen, ob die Freischaltinformation mit einer vorgegebenen Freischaltinformation übereinstimmt; und
falls die Freischaltinformation mit der vorgegebenen Freischaltinformation übereinstimmt, Erzeugen des Gerätezertifikats.

Die Freischaltinformation ist beispielsweise ein Entsperrcode, ein Freischaltcode oder ein PIN. Die Freischaltinformation kann durch einen Benutzer oder von einem anderen Gerät über die Schnittstelle des Geräts an die Sicherheitseinrichtung übertragen werden. Insbesondere wird das Gerätezertifikat nur erzeugt, wenn bei der Überprüfung der Freischaltinformation erkannt wird, dass sie mit der vorgegebenen Freischaltinformation übereinstimmt. Die vorgegebene Freischaltinformation kann bei der Herstellung der Sicherheitseinrichtung in einer Speichereinrichtung der Sicherheitseinrichtung gespeichert werden.

Gemäß einer weiteren Ausführungsform umfasst das Verfahren ferner:
Erzeugen eines Geräteschlüsselpaars, welches einen öffentlichen und einen privaten Geräteschlüssel umfasst;
Speichern des privaten Geräteschlüssels in eine Schlüsselspeichereinrichtung des Geräts; und
Einbinden des öffentlichen Geräteschlüssels in das Gerätezertifikat beim Erzeugen des Gerätezertifikats.

Der private und der öffentliche Geräteschlüssel bilden insbesondere ein kryptographisches Geräteschlüsselpaar. Insbesondere erzeugt die Sicherheitseinrichtung das Schlüsselpaar. Der öffentliche Schlüssel kann beim Erzeugen des Gerätezertifikats derart in das Gerätezertifikat eingebunden bzw. eincodiert werden, dass ein Kommunikationspartner des Geräts den öffentlichen Schlüssel aus dem Gerätezertifikat erhalten kann, um mit Hilfe eines asymmetrischen kryptographischen Verfahrens mit dem Gerät zu kommunizieren. Insbesondere kann der Kommunikationspartner Daten, die für das Gerät bestimmt sind, mit dem öffentlichen Schlüssel verschlüsseln, sodass sie nur durch den in dem Gerät gespeicherten zugehörigen privaten Schlüssel entschlüsselt werden können und danach weiter nutzbar sind.

Gemäß einer weiteren Ausführungsform enthält die gerätespezifische Identifizierungsinformation zumindest eine Seriennummer des Geräts.

Gemäß einer weiteren Ausführungsform enthält das Gerätezertifikat die Identifizierungsinformation, eine Seriennummer des Gerätes, eine Information über eine Version des Geräts, eine Information über den Hersteller des Geräts, ein Zertifikatserstellungsdatum und/oder den privaten Geräteschlüssel. Die Information über die Version des Geräts kann insbesondere eine Version zum Hardware-Version des Gerätes und/oder eine Information zur Firmware-Version des Gerätes umfassen.

Gemäß einer weiteren Ausführungsform wird das Gerätezertifikat in einem vorgegebenen Zertifikatsformat erzeugt. Hierzu kann in der Sicherheitseinrichtung eine Zertifikatsvorlage enthalten bzw. gespeichert sein, die zumindest manche Felder des Gerätezertifikats vorgibt. Zum Beispiel kann die Reihenfolge der in dem Gerätezertifikat erhaltenen Informationen durch die Zertifikatsvorlage vorgesehen sein. Es kann auch ein Standard für das Zertifikat, beispielsweise der Standard X.509, durch die Zertifikatsvorlage vorgegeben sein.

Gemäß einer weiteren Ausführungsform wird ein Sicherheitssystem mit der beschriebenen Sicherheitseinrichtung und dem beschriebenen Gerät vorgeschlagen, wobei das Gerät eingerichtet ist, mit der Sicherheitseinrichtung gekoppelt zu werden. In Ausführungsformen sind die Sicherheitseinrichtung und das Gerät miteinander kommunikativ verbunden.

Die für das vorgeschlagene Verfahren beschriebenen Ausführungsformen und Merkmale gelten für die vorgeschlagene Sicherheitseinrichtung und für das vorgeschlagene Sicherheitssystem entsprechend.

Weitere mögliche Implementierungen des Verfahrens, der Sicherheitseinrichtung und des Sicherheitssystems umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen. Insbesondere ist eine Reihenfolge der beschriebenen Schritte modifizierbar.

Weitere vorteilhafte Ausgestaltungen und Aspekte der Erfindung sind Gegenstand der Unteransprüche sowie der im Folgenden beschriebenen Ausführungsbeispiele. Im Weiteren wird die Erfindung anhand von bevorzugten Ausführungsformen unter Bezugnahme auf die beigelegten Figuren näher erläutert.
Fig. 1 zeigt ein Sicherheitssystem gemäß einer ersten Ausführungsform;
Fig. 2 zeigt eine Sicherheitseinrichtung gemäß einer ersten Ausführungsform;
Fig. 3 zeigt ein Ablaufdiagramm für ein Verfahren zum Erzeugen eines gerätespezifischen Gerätezertifikats für ein Gerät gemäß einer ersten Ausführungsform;
Fig. 4 zeigt ein Ablaufdiagramm für ein Verfahren zum Erzeugen von gerätespezifischen Gerätezertifikaten für mehrere Geräte gemäß einer ersten Ausführungsform;
Fig. 5 zeigt ein Ablaufdiagramm für ein Verfahren zum Erzeugen eines gerätespezifischen Gerätezertifikats gemäß einer zweiten Ausführungsform; und
Fig. 6 zeigt eine sichere Kommunikation von Geräten in einem Netzwerk gemäß einer ersten Ausführungsform.

In den Figuren sind gleiche oder funktionsgleiche Elemente mit denselben Bezugszeichen versehen worden, sofern nichts anderes angegeben ist.

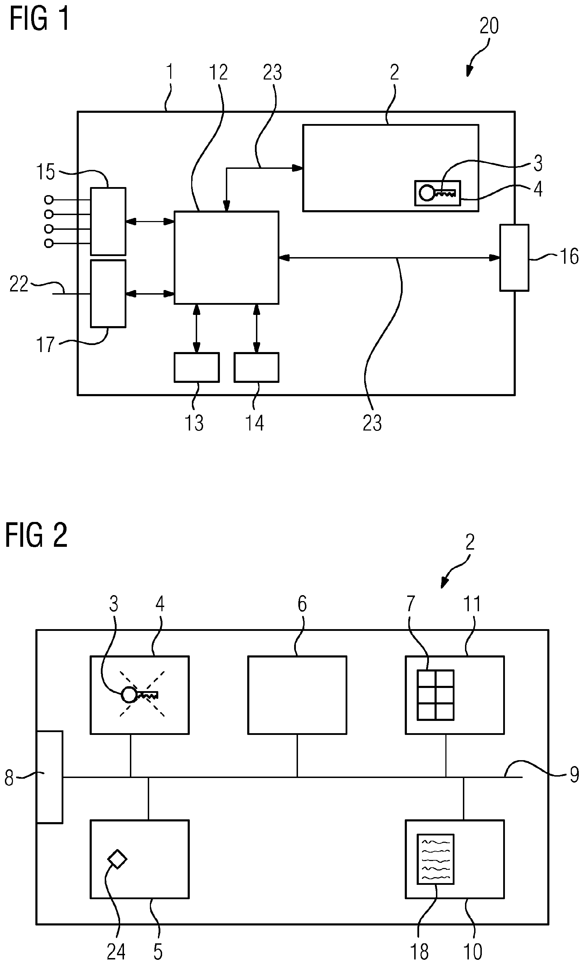

Die Fig. 1 zeigt ein Sicherheitssystem 20 gemäß einer ersten Ausführungsform. Das Sicherheitssystem 20 umfasst ein Gerät 1 mit einer eingebetteten Sicherheitseinrichtung 2, welche hier ein Hardware-Sicherheitsmodul (HSM) ist. Das Gerät 1 ist hier ein IdD-Feldgerät, das als ein Überwachungsfeldgerät in einer Produktionsstraße eingesetzt wird. Das IdD-Feldgerät 1 ist über eine Netzwerkschnittstelle 17 mit einem Netzwerk 22, hier einem Feldbus, verbunden. Das Netzwerk 22 umfasst weitere, nicht dargestellte IdD-Geräte, die über das Netzwerk 22 Daten mit dem IdD-Feldgerät 1 austauschen. Diese weiteren IdD-Geräte sind Kommunikationspartner für das IdD-Feldgerät 1, im Folgenden auch nur Feldgerät 1.

Das Feldgerät 1 umfasst ferner eine Ein- und Ausgabe-Schnittstelle 15, einen Prozessor 12, zwei Gerätespeichereinrichtungen 13, 14 und eine Benutzerschnittstelle 16. Die einzelnen Elemente des Feldgeräts 1 sind über Verbindungen 23, hier ein internes Bussystem, miteinander verbunden. Die Benutzerschnittstelle 16 ist hier eine USB-Schnittstelle, über welche ein Benutzer Daten an das Feldgerät 1 übertragen kann und Daten von dem Feldgerät 1 auslesen kann. Insbesondere wird das Feldgerät 1 bei der Programmierung über die USB-Schnittstelle 16 konfiguriert. Der Benutzer stellt zum Beispiel dem HSM 2 über die USB-Schnittstelle 16 eine noch im Folgenden beschriebene gerätespezifische Identifizierungsinformation zur Verfügung.

Die Ein- und Ausgabe Schnittstelle 15 ist als eine Einheit zum Verbinden mit externen Sensoreinheiten (nicht dargestellt) ausgeführt, mit welcher das Feldgerät 1 einen Druck und eine Temperatur am Feldgerät 1 erfassen kann. Erfasste Druck- und Sensordaten können in den Gerätespeichereinrichtungen 13, 14 gespeichert werden. Weiterhin können Aktoren mit der Ein- und Ausgabe Schnittstelle 15 verbunden werden. Beispielsweise kann ein Ventil als Aktor vom Feldgerät 1 angesteuert werden, wenn der erfasste Druck oder die erfasste Temperatur einen jeweiligen vorgebbaren Schwellwert überschreiten.

Die Gerätespeichereinrichtung 13 ist als ein RAM-Speicher ausgeführt, und die Gerätespeichereinrichtung 14 ist als ein Flash-Speicher ausgeführt. Die in den Gerätespeichereinrichtungen 13, 14 gespeicherte Druck- und Temperaturdaten können mit Hilfe eines im Folgenden näher beschriebenen privaten kryptographischen Schlüssels durch die Sicherheitseinrichtung 2 verschlüsselt werden und somit über das Netzwerk 22 sicher an die anderen Geräte bzw. Kommunikationspartner übertragen werden.

Das HSM 2 wird anhand der Fig. 2, welche eine Sicherheitseinrichtung 2 gemäß einer ersten Ausführungsform zeigt, nä-her beschrieben. Das HSM 2 umfasst eine Schlüsselspeichereinrichtung 4, eine Identifizierungsinformationsspeichereinrichtung 5, eine Zertifikaterzeugungseinrichtung 6 und eine Schnittstelle 8, welche über einen internen Bus 9 miteinan-der verbunden sind. Fakultativ kann das Sicherheitselement 2 zusätzlich auch noch eine Zertifikatspeichereinrichtung 10 und eine Vorlagenspeichereinrichtung 11 aufweisen.

Die Schnittstelle 8 dient zur Kopplung des HSM 2 mit dem Feldgerät 1. Daten können zwischen dem HSM 2 und dem Feldge-rät 1 über die (physikalische) Schnittstelle 8 ausgetauscht werden. Bei der Herstellung des HSM 2 wird in der Schlüsselspeichereinrichtung 4, welche eine sichere Speichereinrichtung ist, ein HSM-unspezifischer Signierschlüssel 3 gespeichert. Der Signierschlüssel 3 ist hierbei ein einmalig verwendbarer privater Signierschlüssel.

Die Identifizierungsinformationsspeichereinrichtung 5 dient dazu, die von dem Benutzer über die USB-Schnittstelle 16 bereitgestellte Identifizierungsinformation 21 zu speichern. Die Zertifikaterzeugungseinrichtung 6 kann ein gerätespezi-fisches Gerätezertifikat 18 erstellen und signieren. In der Vorlagenspeichereinrichtung 11 ist eine Vorlage 7 für das Gerätezertifikat 18 gespeichert, welche beim Erzeugen des Gerätezertifikats 18 durch die Zertifikaterzeugungseinrich-tung 6 herangezogen wird. Die Vorlage 7 bestimmt ein Format des zu erzeugenden Gerätezertifikats. In der vorliegenden Ausführungsform gibt die Vorlage 7 zum Beispiel vor, dass das Gerätezertifikat 18 eine Seriennummer und ein Zertifi-katserstellungsdatum enthalten soll. Das Gerätezertifikat 18 ist ein digitales Zertifikat nach dem kryptographischen Standard X.509.

In einer Variante verfügt das HSM 2 über einen integrierten Zeitgeber als Echtzeituhr (Real Time Clock), was in der Fi-gur nicht dargestellt ist. In einer anderen Variante wird der Zertifikaterzeugungseinrichtung 6 des HSM 2 eine Zeitin-formation über die Schnittstelle 8 bereitgestellt. Die Zeitinformation kann von dem Prozessor 12 des Feldgeräts 1 von einem Zeitgeberbaustein (nicht dargestellt) des Feldge-räts 1 abgefragt und dem HSM 2 bereitgestellt werden. In ei-ner weiteren Variante erstellt ein Zeitsynchronisationsser-ver, der mit dem Feldgerät 1 über die Netzwerkschnittstelle verbunden ist, eine durch eine kryptographische Prüfsumme geschützte Zeitsynchronisationsinformation, die von dem Feldgerät 1 empfangen und dem HSM 2 bereitgestellt wird.

Das erzeugte Gerätezertifikat 18 kann dann in der Zertifikatspeichereinrichtung 10 gespeichert werden, um zur Authentisierung des Feldgeräts 1 verwendet zu werden.

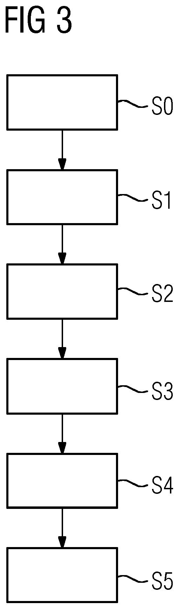

Die Funktionalität der einzelnen Elemente des HSM 2 wird anhand der Fig. 3 näher beschrieben. Die Fig. 3 zeigt hierbei ein Verfahren zum Erzeugen eines gerätespezifischen Gerätezertifikats für ein Gerät 1 gemäß einer ersten Ausführungsform. Das in der Fig. 3 dargestellte Verfahren kann insbesondere durch das HSM 2 der Fig. 1 oder 2 durchgeführt werden, um ein Gerätezertifikat 18 für das Feldgerät 1 der Fig. 1 zu erzeugen.

In einem Vorbereitungsschritt S0 werden das Feldgerät 1 und das HSM 2 separat bereitgestellt. In der Schlüsselspeichereinrichtung 4 des HSM 2 ist bereits der Signierschlüssel 3 sicher gespeichert.

In einem Schritt S1 werden das HSM 2 und das Feldgerät 1 miteinander gekoppelt. Das HSM 2 wird bei dem Koppeln in ei-nem Gehäuse des Feldgeräts 1 integriert. Die Kopplung des HSM 2 und des Feldgeräts 1 führt dazu, dass diese über die Schnittstelle 8 kommunizieren können.

In einem Schritt S2 wird eine gerätespezifische Identifizierungsinformation 21 in dem HSM 2 gespeichert. Die gerätespezifische Identifizierungsinformation 21 ist hier eine Seriennummer des Feldgeräts 1. Die Seriennummer 1 ist eine eindeutige alphanumerische Bezeichnung, die zur Identifika-tion des Feldgeräts 1 verwendet werden kann und somit gerätespezifisch ist. Die Seriennummer 21 wird durch den Benut-zer über die USB-Schnittstelle 16 von dem Feldgerät 1 erhal-ten und über das interne Bussystem 23 an das HSM 2 übertra-gen. In dem HSM 2 wird die Seriennummer 21 in der Identifizierungsinformationsspeichereinrichtung 5 gespeichert.

In einem Schritt S3 wird in dem HSM 2 auf den privaten Signierschlüssel 3 zugegriffen. Hierbei wird der Signierschlüssel 3 durch die Zertifikaterzeugungseinrichtung 6 aus der Schlüsselspeichereinrichtung 4 ausgelesen.

In einem Schritt S4 wird das gerätespezifische Gerätezertifikat durch die Zertifikaterzeugungseinrichtung 6 erzeugt. Zunächst erzeugt die Zertifikaterzeugungseinrichtung 6 eine Zertifikatsvorlage nach dem Standard X.509, die einem nicht signierten Gerätezertifikat entspricht. Die Zertifikaterzeugungseinrichtung 6 greift hierbei auf die Vorlage 7 zu, die in der Vorlagenspeichereinrichtung 11 gespeichert ist. Fer-ner berücksichtigt die Zertifikatserzeugungseinrichtung 6 die empfangene Seriennummer 18 und codiert diese in die Zertifikatsvorlage mit ein.

Die Zertifikatsvorlage wird daraufhin durch die Zertifikaterzeugungseinrichtung 6 mit dem im Schritt S3 zugegriffenen Signierschlüssel 3 signiert. Dadurch entsteht das Gerätezertifikat 18 in dem durch die Vorlage 7 vorgegebenen Format. Es enthält insbesondere die in dem Schritt S2 erhaltene Seriennummer 21, wodurch die Gerätespezifität des Gerätezertifikats 18 gewährleistet wird. Das Gerätezertifikat enthält zum Beispiel ferner das Zertifikatserstellungsdatum. Das er-zeugte Gerätezertifikat 18 wird in der Zertifikatspeicher-einrichtung 10 gespeichert.

In einem Schritt S5 wird ein weiterer Zugriff auf den privaten Signierschlüssel 3 unterbunden. Hierzu wird der Signierschlüssel 3 aus der Schlüsselspeichereinrichtung 4 gelöscht, wie in der Fig. 2 durch den gestrichelt durchgestrichenen Signierschlüssel 3 dargestellt wird. Dadurch können keine weiteren Gerätezertifikate 18 mehr erzeugt werden.

Indem die Schritte S1 bis S5 durch das HSM 2 in dem Feldge-rät 1 durchgeführt werden, wird für das Feldgerät 1 das gerätespezifische Gerätezertifikat 18 erstellt. Dadurch wird dem Feldgerät 1 seine Sicherheitsfunktionen verliehen. Das Gerätezertifikat 18 kann zur Erstellung einer sicheren Kommunikation mit einem anderen Gerät aus dem Netzwerk 22 an das andere Gerät (Kommunikationspartner) gesendet werden. Der Kommunikationspartner authentisiert das Feldgerät 1 mit dem empfangenen Gerätezertifikat 18, wodurch die sichere Kommunikation ermöglicht wird.

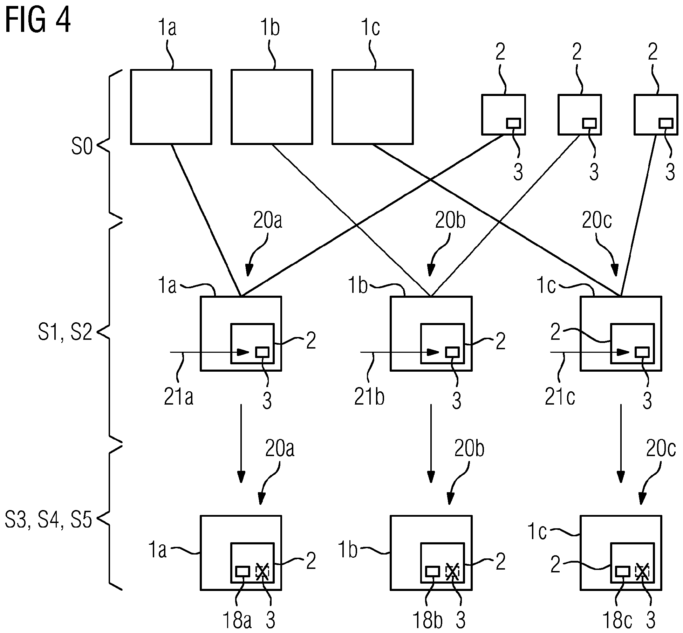

Die Fig. 4 zeigt ein Verfahren zum Erzeugen von gerätespezifischen Gerätezertifikaten für mehrere Geräte gemäß einer ersten Ausführungsform. Die Schritte S0 und S5 aus der Fig. 3 werden hierbei an drei Sicherheitssystemen 20a, 20b und 20c parallel durchgeführt. In der Fig. 4 werden parallel zueinander gerätespezifische Gerätezertifikate für drei verschiedene Feldgeräte 1a, 1b und 1c erzeugt. Die Gerätezertifikate werden hier nicht zur gleichen Zeit erzeugt, und die drei Sicherheitssysteme 20a, 20b und 20c befinden sich auch nicht am gleichen physikalischen Ort. Die Erstellung der drei Gerätezertifikate erfolgt unabhängig voneinander. Die Feldgeräte 1a, 1b und 1c umfassen die gleichen Komponenten wie das Feldgerät 1 aus der Fig. 1.

In dem Vorbereitungsschritt S0 werden die drei Feldgeräte 1a, 1b und 1c bereitgestellt. Diese sind identische Feldge-räte, denen unterschiedliche Seriennummern zugewiesen wer-den. Die Seriennummer ist eine eindeutige alphanumerische Bezeichnung, die zur Identifikation des Feldgeräts 1a, 1b, 1c verwendet werden kann und somit gerätespezifisch ist. In dem Vorbereitungsschritt S0 werden ferner drei komplett identische HSM 2 bereitgestellt, welche jede denselben Sig-nierschlüssel 3 umfassen.

In dem Schritt S1 werden die Feldgeräte 1a, 1b und 1c je-weils mit einem HSM 2 gekoppelt. Die Kopplung erfolgt wie bereits in Bezug auf die Fig. 3 beschrieben. Dadurch werden die Sicherheitssysteme 20a, 20b und 20c gebildet.

In dem Schritt S2 gibt der Benutzer die Seriennummer 21a, 21b und 21c über die USB-Schnittstelle 16 in das Feldgerät 1 ein, welches diese über das interne Bussystem 23 an das HSM 2 weiterleitet. Somit erhält in dem Schritt S2 jedes der HSM 2 eine Seriennummer 21a, 21b und 21c und speichert diese in nicht dargestellten Identifizierungsinformationsspeichereinrichtungen 5. In den Schritten S3 und S4 wird auf die jeweiligen Signierschlüssel 3 zugegriffen, und es werden, unter Berücksichtigung der jeweiligen Seriennummern 20a, 20b und 20c Gerätezertifikate 18a, 18b und 18c erzeugt, die die Seriennummern 20a, 20b und 20c enthalten und mit den Signierschlüsseln 3 signiert sind.

In dem Schritt S5 wird ein weiterer Zugriff auf die jeweiligen Signierschlüssel unterbunden, indem diese aus den jeweiligen, nicht dargestellten Schlüsselspeichereinrichtungen 4 der HSM 2 gelöscht werden. In der Fig. 4 sind die gelöschten Signierschlüssel 3 gestrichelt und durchgestrichen dargestellt.

Die Fig. 4 zeigt somit, wie anhand des Verfahrens aus der Fig. 3 mit mehreren identischen HSM 2 in mehreren Feldgerä-ten 1a, 1b und 1c unterschiedliche, gerätespezifische Gerätezertifikate 18a, 18b und 18c zur Authentisierung der Feldgeräte 1a, 1b und 1c erzeugt werden können. Insbesondere wird hierzu keine zentrale PKI benötigt.

Obwohl in der Fig. 4 Gerätezertifikate 18a, 18b und 18c für drei Feldgeräte 1a, 1b und 1c erstellt werden, können in einem entsprechenden Verfahren Gerätezertifikate für beliebig viele Feldgeräte mit nur einem Typ von Sicherheitseinrichtungen bzw. HSM 2 erzeugt werden.

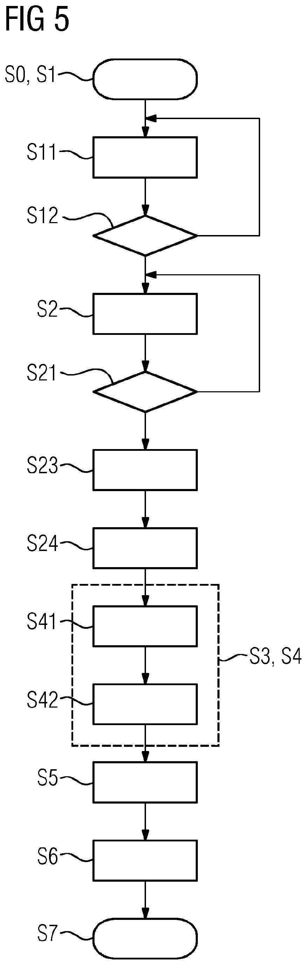

Die Fig. 5 zeigt ein abgewandeltes Verfahren zum Erzeugen eines gerätespezifischen Gerätezertifikats gemäß einer zwei-ten Ausführungsform. Mit dem Verfahren gemäß der zweiten Ausführungsform wird das Gerätezertifikat 18 nur erstellt, wenn gewisse Voraussetzungen erfüllt sind, wodurch das Gerätezertifikat 18 mit erhöhter Sicherheit erstellt wird. Das HSM 2 aus der Fig. 2 kann das Verfahren aus der Fig. 5 durchführen. In dem Verfahren gemäß der zweiten Ausführungs-form sind die Schritte S0, S1, S2, S3, S4 und S5 identisch mit den Schritten S0 bis S5 aus der ersten Ausführungsform gemäß der Fig. 3 und werden nicht nochmal beschrieben.

Zusätzlich zu den Schritten S0 bis S5 wird in dem Verfahren gemäß der zweiten Ausführungsform vorgeschlagen, dass das HSM 2 in einem Schritt S11 nach dem Koppeln der HSM 2 mit dem Feldgerät 1 gemäß den Schritten S0 und S1 eine Freischaltinformation, hier einen Entsperrcode, empfängt. Der Entsperrcode wird durch den Benutzer über die USB-Schnittstelle 16 an das Feldgerät 1 übertragen und dann über die Schnittstelle 8 an das HSM 2 übermittelt.

Der empfangene Entsperrcode wird in einem Schritt S12 mit einem vorgegebenen Entsperrcode (z.B. 1234) als vorgegebene Freischaltinformation verglichen. In einer Variante wird die Gültigkeit des empfangene Entsperrcodes anhand einer vorgegebenen Prüfinformation überprüft. Der vorgegebenen Entsperrcode bzw. die vorgegebene Prüfinformation wird bereits bei der Herstellung des HSM 2 in der Identifizierungsinformationsspeichereinrichtung 5, im Folgenden auch nur Speichereinrichtung 5, geschützt gespeichert. Falls der empfangene Entsperrcode mit dem vorgegebenen Entsperrcode übereinstimmt bzw. falls der empfangene Entsperrcode anhand der vorgegebenen Prüfinformation als gültig überprüfbar ist, geht das Verfahren zum Schritt S2 über. Ansonsten werden die Schritte S11 und S12 widerholt, bis ein Entsperrcode empfan-gen wird, der mit dem vorgegebenen Entsperrcode überein-stimmt.

In einem Schritt S21 überprüft das HSM 2 ferner, ob die in dem Schritt S2 gespeicherte Seriennummer zulässig ist. Hier-zu wird das Format der gespeicherten Seriennummer mit einem vorgegebenen Datenformat, welches bei der Herstellung des HSM 2 in der Identifizierungsinformationsspeichereinrichtung 5 gespeichert wird, verglichen. Das vorgegebene Datenformat gibt zum Beispiel vor, dass die Seriennummer drei Buchstaben und sechs Ziffern enthalten muss. Falls die Datenformate übereinstimmen, wird in dem Schritt S21 bestimmt, dass das Datenformat der gespeicherten Seriennummer zulässig ist, und das Verfahren wird mit einem Schritt S23 weitergeführt. Falls die Datenformate nicht übereinstimmen, werden die Schritte S2 und S21 wiederholt. Das heißt, es wird erneut einer Seriennummer durch den Benutzer eingegeben (S2), und es wird erneut überprüft, ob diese das vorgegebene Datenfor-mat aufweist (S21).

In einem Schritt S23 erzeugt das HSM 2 ein kryptographisches Geräteschlüsselpaar mit einem kryptographischen privaten und einem kryptographischen öffentlichen Geräteschlüssel. Der private Geräteschlüssel wird in einem Schritt S24 in der Speichereinrichtung 5 gespeichert. Der private Geräteschlüs-sel wird zum Entschlüsseln von mit dem öffentlichen Geräteschlüssel verschlüsselten Daten benutzt.

In einem Schritt S41 wird die Zertifikatsvorlage mit der Zertifikaterzeugungseinrichtung 6 erstellt. Zusätzlich zur empfangenen Seriennummer 21 erhält die Zertifikatsvorlage auch den öffentlichen Geräteschlüssel, der in dem Schritt S23 erzeugt wurde.

In einem Schritt S42 wird die Zertifikatsvorlage mit dem Signierschlüssel 3 durch die Zertifikaterzeugungseinrichtung 6 signiert, und somit wird das Gerätezertifikat 18 fertig erstellt. Das Gerätezertifikat 18 enthält zumindest die Seriennummer 21 und den öffentlichen Geräteschlüssel. Die Schritte S41 und S42 sind Teil der bereits beschriebenen Schritte S3 und S4.

In dem Schritt S5 wird, wie bereits oberhalb beschrieben, der Signierschlüssel 3 gelöscht. In einem Schritt S6 wird das in dem Schritt S4 erzeugte Gerätezertifikat in der Zertifikatspeichereinrichtung 10 gespeichert.

Das Verfahren gemäß der zweiten Ausführungsform wird mit dem Schritt S7 beendet. Das Feldgerät 1 kann das Gerätezertifi-kat 18 an die weiteren Feldgeräte bzw. Kommunikationspartner in dem Netzwerk bzw. Feldbus 22 aus der Fig. 1 übersenden, damit diese es anhand der Information in dem Gerätezertifi-kat 18, insbesondere anhand der Seriennummer 21 authentisie-ren können. Es kann eine sichere Kommunikation zwischen dem Feldgerät 1 und den weiteren Feldgeräten erfolgen, weil die weiteren Feldgeräte mit dem Gerätezertifikat 18 des Feldge-räts 1 den öffentlichen Geräteschlüssel erhalten. Eine si-chere Kommunikation bezeichnet hier einen Austausch von kryptographisch geschützten Daten.

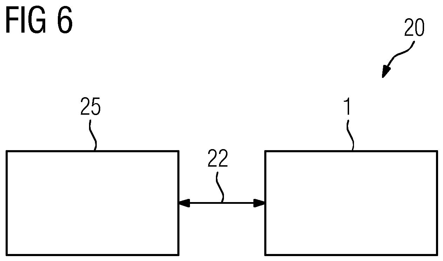

Diese sichere Kommunikation zwischen dem Feldgerät 1 und einem weiteren Gerät 25 in dem Netzwerk 22 ist in der Fig. 6 dargestellt. Das weitere Gerät 25 ist auch ein Feldgerät und ist hier der Kommunikationspartner des Feldgeräts 1. Der Kommunikationspartner 25 ist hier ein elektrischer Motor. Das Feldgerät 1 und der Kommunikationspartner 25 sind über das Netzwerk 22 miteinander gekoppelt. Wenn das Feldgerät 1 zuerst mit dem Kommunikationspartner 25 gekoppelt wird, übersendet es sein mit Hilfe des HSM 2 erstelltes Gerätezer-tifikat 18 an den Kommunikationspartner 25. Der Kommunikati-onspartner 25 liest die in dem Gerätezertifikat 18 enthalte-nen Informationen, also die Seriennummer 21, das Zertifikatserstellungsdatum, den öffentlichen Geräteschlüssel usw., aus und überprüft so die Gültigkeit des Gerätezertifikats 18. Zur Überprüfung der Gültigkeit wird zum Beispiel anhand des Zertifikatserstellungsdatums überprüft, ob das Gerätezertifikat 18 noch nicht zu alt ist bzw. bereits abgelaufen ist.

Falls der Kommunikationspartner 25 bestimmt, dass das Gerätezertifikat 18 ungültig ist, weil es zum Beispiel bereits abgelaufen ist, wird die sichere Kommunikation zwischen dem Feldgerät 1 und dem Kommunikationspartner 25 nicht eingerichtet.

Falls der Kommunikationspartner 25 bestimmt, dass das Gerätezertifikat 18 gültig ist, wird die sichere Kommunikation zwischen dem Feldgerät 1 und dem Kommunikationspartner 25 eingerichtet. Diese erfolgt über das bereits vorhandene Netzwerk 22. Der Kommunikationspartner 25 verwendet den in dem Gerätezertifikat 18 erhaltenen öffentlichen Geräte-schlüssel, um Daten zu verschlüsseln. Die Daten sind zum Beispiel Daten über einen Motorzustand, die an das Feldgerät 1 zu übertragen sind. Die verschlüsselten Daten werden über das Netzwerk 22 an das Feldgerät 1 übertragen, welches an-hand des gespeicherten privaten Geräteschlüssels die empfan-genen Daten entschlüsselt. Die entschlüsselten Daten können dann durch das Feldgerät 1 weiterverwendet werden, zum Bei-spiel modifiziert werden oder über die USB-Schnittstelle 16 an den Benutzer ausgegeben werden.

Die in der Fig. 6 dargestellte sichere Kommunikation zwi-schen dem Feldgerät 1 und dem Kommunikationspartner 25 kann entsprechend zwischen dem Feldgerät 1 und weiteren Kommunikationspartnern stattfinden.

Obwohl die vorliegende Erfindung anhand von Ausführungsbeispielen beschrieben wurde, ist sie vielfältig modifizierbar. Beispielsweise können beliebige elektronische Geräte, zum Beispiel IO-link Geräte, anstelle des beschriebenen IdD-Feldgeräts 1 verwendet werden. Dieses elektronische Gerät kann zudem beliebig aufgebaut sein und kann beispielsweise zusätzliche Schnittstellen und/oder Sensorelemente umfassen. Die Identifizierungsinformation kann eine beliebige gerätespezifische Information sein und kann anstelle der Seriennummer zum Beispiel auch eine Beschreibung des Geräts sein. Die Identifizierungsinformation kann auch als Zufallszahl durch die Sicherheitseinrichtung 2 erzeugt werden. Statt den Signierschlüssel zu löschen kann auch der Zugriff auf den Signierschlüssel gesperrt werden. Das erzeugte Gerätezerti-fikat kann auch in der Gerätespeichereinrichtung 13 gespei-chert werden statt in der Sicherheitseinrichtung 2. Die Rei-henfolge der in Fig. 3 und 5 beschriebenen Verfahrensschrit-te ist modifizierbar, zum Beispiel kann das Löschen des Signierschlüssels vor dem Erzeugen des Gerätezertifikats erfolgen.

### Bezugszeichenliste

1 Gerät
2 Sicherheitseinrichtung
3 Signierschlüssel
4 Schlüsselspeichereinrichtung
5 Identifizierungsinformationsspeichereinrich-tung
6 Zertifikaterzeugungseinrichtung
7 Vorlage
8 Schnittstelle
9 interner Bus
10 Zertifikatspeichereinrichtung
11 Vorlagenspeichereinrichtung
12 Prozessor
13, 14 Gerätespeichereinrichtung
15 Ein- und Ausgabe Schnittstelle
16 Benutzerschnittstelle
17 Netzwerkschnittstelle
18, 18a,
18b, 18c gerätespezifisches Gerätezertifikat
20, 20a, 20b, 20c Sicherheitssystem
21, 21a,
21b, 21c gerätespezifische Identifizierungsinformation
22 Netzwerk
23 internes Bussystem
24 Identifizierungsinformation
25 Kommunikationspartner

S0 Bereitstellen des Geräts und der Sicherheits-einrichtung
S1 Koppeln der Sicherheitseinrichtung mit dem Ge-rät
S11 Empfangen der Freischaltinformation
S12 Überprüfen, ob die Freischaltinformation mit einer vorgegebenen Freischaltinformation über-einstimmt
S2 Speichern der gerätespezifischen Identifizierungsinformation in der Sicherheitseinrichtung
S21 Überprüfen, ob die gespeicherte Identifizierungsinformation in einem vorgegebenen Daten-format gespeichert ist
S23 Erzeugen eines Geräteschlüsselpaars
S24 Speichern des privaten Geräteschlüssels in ei-ne Schlüsselspeichereinrichtung
S3 Zugreifen auf den privaten Signierschlüssel
S4 Erzeugen des gerätespezifischen Gerätezertifi-kats
S41 Einbinden des öffentlichen Geräteschlüssels in das Gerätezertifikat beim Erzeugen des Geräte-zertifikats
S42 Signieren der Zertifikatsvorlage mit dem Sig-nierschlüssel durch die Zertifikaterzeugungs-einrichtung
S5 Unterbinden eines weiteren Zugriffs auf den privaten Signierschlüssel
S6 Speichern des Gerätezertifikats in der Zertifikatspeichereinrichtung
S7 Beenden des Verfahrens

## Patentansprüche

1. Verfahren zum Erzeugen eines gerätespezifischen Gerätezertifikats (18, 18a - 18c) für ein Gerät (1, 1a - 1c), umfassend:
Koppeln (S1) einer Sicherheitseinrichtung (2) mit dem Gerät (1, 1a - 1c), wobei in der Sicherheitseinrichtung ein einmalig verwendbarer privater Signierschlüssel (3) gespeichert ist;
Erzeugen einer gerätespezifischen Identifizierungsinformation (21a - 21c) in der Sicherheitseinrichtung (2);
Speichern (S2) der gerätespezifischen Identifizierungsinformation (21a - 21c) in der Sicherheitseinrichtung (2);
Zugreifen (S3) auf den privaten Signierschlüssel (3) in der Sicherheitseinrichtung (2);
Erzeugen (S4) des gerätespezifischen Gerätezertifikats (18, 18a - 18c) in Abhängigkeit von der gespeicherten Identifizierungsinformation (21a - 21c) in der Sicherheitseinrichtung (2), wobei das gerätespezifische Gerätezertifikat (18, 18a - 18c) mit dem privaten Signierschlüssel (3) signiert wird; und
Unterbinden (S5) eines weiteren Zugriffs auf den privaten Signierschlüssel (3).

2. Verfahren nach Anspruch 1, wobei das Unterbinden (S5) des weiteren Zugriffs auf den privaten Signierschlüssel (3) ein Löschen des privaten Signierschlüssels (3), ein Überschreiben des privaten Signierschlüssels (3), ein Verändern des privaten Signierschlüssels (3) und/oder ein Sperren eines Zugriffs auf eine Schlüsselspeichereinrichtung (4), in dem der private Signierschlüssel (3) gespeichert ist, umfasst.

3. Verfahren nach Anspruch 1 oder 2, wobei in mehreren verschiedenen Sicherheitseinrichtungen (2) gespeicherte Signierschlüssel (3) identisch sind.

4. Verfahren nach einem der Ansprüche 1 bis 3, ferner umfassend: in der Sicherheitseinrichtung (2),
Überprüfen (S21), ob die gespeicherte Identifizierungsinformation (21a - 21c) in einem vorgegebenen Datenformat gespeichert ist, und
falls die gespeicherte Identifizierungsinformation (21a - 21c) in dem vorgegebenen Datenformat gespeichert ist, Erzeugen (S4) des gerätespezifischen Gerätezertifikats (18, 18a - 18c).

5. Verfahren nach einem der Ansprüche 1 bis 4, welches ferner umfasst: in der Sicherheitseinrichtung (2),
Empfangen (S11) einer Freischaltinformation;
Überprüfen (S12), ob die Freischaltinformation mit einer vorgegebenen Freischaltinformation übereinstimmt; und
falls die Freischaltinformation mit der vorgegebenen Freischaltinformation übereinstimmt, Erzeugen (S4) des gerätespezifischen Gerätezertifikats (18, 18a - 18c).

6. Verfahren nach einem der Ansprüche 1 bis 5, ferner umfassend:
Erzeugen (S23) eines Geräteschlüsselpaars, welches einen öffentlichen und einen privaten Geräteschlüssel umfasst;
Speichern (S24) des privaten Geräteschlüssels in eine Schlüsselspeichereinrichtung (4) des Geräts (1, 1a - 1c); und
Einbinden (S41) des öffentlichen Geräteschlüssels in das Gerätezertifikat (18, 18a - 18c) beim Erzeugen (S4) des Gerätezertifikats (18, 18a - 18c).

7. Verfahren nach einem der Ansprüche 1 bis 6, wobei die gerätespezifische Identifizierungsinformation (21a - 21c) eine Seriennummer des Geräts (1, 1a - 1c) enthält.

8. Verfahren nach einem der Ansprüche 1 bis 7, wobei das Gerätezertifikat (18, 18a - 18c) die Identifizierungsinformation (21a - 21c), die Seriennummer des Gerätes (1, 1a - 1c), eine Information über den Hersteller des Geräts (1, 1a - 1c), eine Information über eine Version des Geräts (1, 1a - 1c), ein Zertifikatserstellungsdatum und/oder den privaten Geräteschlüssel enthält.

9. Verfahren nach einem der Ansprüche 1 bis 8, wobei das Gerätezertifikat (18, 18a - 18c) in einem vorgegebenen Zertifikatsformat erzeugt wird.

10. Sicherheitseinrichtung (2), welche eingerichtet ist, ein gerätespezifisches Gerätezertifikat (18, 18a - 18c) für ein mit der Sicherheitseinrichtung (2) gekoppelten Gerät (1, 1a - 1c) zu erzeugen, umfassend:
eine Schlüsselspeichereinrichtung (4) zum Speichern eines einmalig verwendbareren privaten Signierschlüssels (3);
eine Identifizierungsinformationserzeugungseinrichtung zum Erzeugen einer gerätespezifischen Identifizierungsinformation (21a - 21c);
eine Identifizierungsinformationsspeichereinrichtung (5) zum Speichern einer gerätespezifischen Identifizierungsinformation (21a - 21c); und
eine Zertifikaterzeugungseinrichtung (6) zum Erzeugen des Gerätezertifikats (18, 18a - 18c) in Abhängigkeit von der gespeicherten Identifizierungsinformation (21a - 21c) und zum Signieren des Gerätezertifikats (18, 18a - 18c) mit dem aus der Schlüsselspeichereinrichtung (4) ausgelesenen privaten Signierschlüssel (3); wobei
die Sicherheitseinrichtung (2) dazu eingerichtet ist, einen weiteren Zugriff auf den privaten Signierschlüssel (3) zu unterbinden.

11. Sicherheitseinrichtung (2) nach Anspruch 10, welche dazu geeignet ist, das Verfahren nach einem der Ansprüche 1 bis 9 durchzuführen.

12. Sicherheitssystem mit der Sicherheitseinrichtung (2) nach Anspruch 10 oder 11 und einem Gerät, welches eingerichtet ist, mit der Sicherheitseinrichtung (2) gekoppelt zu werden.

## Claims

1. Method for generating an apparatus-specific apparatus certificate (18, 18a - 18c) for an apparatus (1, 1a - 1c), comprising:
coupling (S1) a security device (2) to the apparatus (1, 1a - 1c), wherein a one-time useable private signing key (3) is stored in the security device;
generating apparatus-specific identification information (21a - 21c) in the security device (2);
storing (S2) the apparatus-specific identification information (21a - 21c) in the security device (2);
accessing (S3) the private signing key (3) in the security device (2) ;
generating (S4) the apparatus-specific apparatus certificate (18, 18a - 18c) depending on the stored identification information (21a - 21c) in the security device (2), wherein the apparatus-specific apparatus certificate (18, 18a - 18c) is signed using the private signing key (3); and
preventing (S5) a further access to the private signing key (3) .

2. Method according to Claim 1, wherein preventing (S5) the further access to the private signing key (3) comprises erasing the private signing key (3), overwriting the private signing key (3), altering the private signing key (3) and/or blocking an access to a key storage device (4) in which the private signing key (3) is stored.

3. Method according to Claim 1 or 2, wherein signing keys (3) stored in a plurality of different security devices (2) are identical.

4. Method according to any of Claims 1 to 3, furthermore comprising: in the security device (2),
checking (S21) whether the stored identification information (21a - 21c) is stored in a predefined data format, and
if the stored identification information (21a - 21c) is stored in the predefined data format, generating (S4) the apparatus-specific apparatus certificate (18, 18a - 18c).

5. Method according to any of Claims 1 to 4, which furthermore comprises: in the security device (2),
receiving (S11) release information;
checking (S12) whether the release information corresponds to predefined release information; and
if the release information corresponds to the predefined release information, generating (S4) the apparatus-specific apparatus certificate (18, 18a - 18c).

6. Method according to any of Claims 1 to 5, furthermore comprising:
generating (S23) an apparatus key pair comprising a public and a private apparatus key;
storing (S24) the private apparatus key in a key storage device (4) of the apparatus (1, 1a - 1c); and
incorporating (S41) the public apparatus key in the apparatus certificate (18, 18a - 18c) in the course of generating (S4) the apparatus certificate (18, 18a - 18c).

7. Method according to any of Claims 1 to 6, wherein the apparatus-specific identification information (21a - 21c) contains a serial number of the apparatus (1, 1a - 1c).

8. Method according to any of Claims 1 to 7, wherein the apparatus certificate (18, 18a - 18c) contains the identification information (21a - 21c), the serial number of the apparatus (1, 1a - 1c), information about the manufacturer of the apparatus (1, 1a - 1c), information about a version of the apparatus (1, 1a - 1c), a certificate creation date and/or the private apparatus key.

9. Method according to any of Claims 1 to 8, wherein the apparatus certificate (18, 18a - 18c) is generated in a predefined certificate format.

10. Security device (2) which is configured to generate an apparatus-specific apparatus certificate (18, 18a - 18c) for an apparatus (1, 1a - 1c) coupled to the security device (2), comprising:
a key storage device (4) for storing a one-time useable private signing key (3);
an identification information generating device for generating apparatus-specific identification information (21a - 21c);
an identification information storage device (5) for storing apparatus-specific identification information (21a - 21c); and
a certificate generating device (6) for generating the apparatus certificate (18, 18a - 18c) depending on the stored identification information (21a - 21c) and for signing the apparatus certificate (18, 18a - 18c) using the private signing key (3) read out from the key storage device (4); wherein
the security device (2) is configured to prevent a further access to the private signing key (3).

11. Security device (2) according to Claim 10, which is suitable for carrying out the method according to any of Claims 1 to 9.

12. Security system comprising the security device (2) according to Claim 10 or 11 and an apparatus which is configured to be coupled to the security device (2).

## Revendications

1. Procédé de production d'un certificat (18,18a-18c) spécifique à un appareil, pour un appareil (1, 1a-1c) comprenant :
le couplage (S1) d'un dispositif (2) de sécurité à l'appareil (1, 1a-1c), dans lequel une clé (3) signée privée, utilisable une fois, est mise en mémoire dans le dispositif de sécurité ;
la production d'une information (21a-21c) d'identification spécifique à un appareil dans le dispositif (2) de sécurité ;
la mémorisation (S2) de l'information (21a-21c) d'identification spécifique à un appareil dans le dispositif (2) de sécurité ;
l'accès (S3) à la clé (3) signée privée dans le dispositif (2) de sécurité ;
la production (S4) dans le dispositif (2) de sécurité du certificat (18,18a-18c) d'appareil spécifique à l'appareil, en fonction de l'information (21a-21c) d'identification mise en mémoire, le certificat (18 ,18a-18c) d'appareil spécifique à un appareil étant signé par la clé (3) signée privée ; et
l'interdiction (S5) d'un autre accès à la clé (3) signée privée.

2. Procédé suivant la revendication 1, dans lequel l'interdiction (S5) de l'autre accès à la clé (3) signée privée comprend un effacement de la clé (3) signée privée un écrasement de la clé (3) signée privée, une modification de la clé (3) signée privée et/ou un blocage d'un accès à un dispositif (4) de mise en mémoire de clés, dans lequel la clé (3) signée privée est mise en mémoire.

3. Procédé suivant la revendication 1 ou 2, dans lequel des clés (3) signées mises en mémoire dans plusieurs dispositifs de sécurité différents sont pareilles.

4. Procédé suivant l'une des revendications 1 à 3, comprenant en outre dans le dispositif (2) de sécurité,
le contrôle (S21) du point de savoir si l'information (21a-21c) d'identification mise en mémoire est mise en mémoire suivant un format de donnés donné à l'avance et, si l'information (21a-21c) d'identification mise en mémoire est mise en mémoire dans le format de données donné à l'avance, la production (S4) du certificat (18,18a-18c) d'appareil spécifique à un appareil.

5. Procédé suivant l'une des revendications 1 à 4, qui comprend en outre, dans le dispositif (2) de sécurité :
la réception (S11) d'une information de validation ;
le contrôle (S12) du point de savoir si l'information de validation coïncide avec une information de validation donnée à l'avance ; et,
si l'information de validation coïncide avec l'information de validation donnée à l'avance, la production (S4) du certificat (18,18a-18c) d'appareil spécifique à un appareil.

6. Procédé suivant l'une des revendications 1 à 5, comprenant en outre :
la production (S23) d'une paire de clés d'appareil, qui comprend une clé d'appareil publique et une clé d'appareil privée ;
la mise en mémoire (S24) de la clé d'appareil privée dans un dispositif (4) de mise en mémoire de clés de l'appareil (1,1a-1c) ; et
l'intégration (S41) de la clé d'appareil publique dans le certificat (18,18a-18c) d'appareil, lors de la production (S4) du certificat (18,18a-18c) d'appareil.

7. Procédé suivant l'une des revendications 1 à 6, dans lequel l'information (21a-21c) d'identification spécifique à un appareil contient un numéro de série de l'appareil (1, 1a-1c).

8. Procédé suivant l'une des revendications 1 à 7, dans lequel, le certificat (18,18a-18c) d'appareil contient l'information (21a-21c) d'identification, le numéro de série de l'appareil (1, 1a-1c), une information sur le fabricant de l'appareil (1, 1a-1c), une information sur une version d'appareil (1, 1a-1c), une date d'établissement du certificat et/ou la clé d'appareil privée.

9. Procédé suivant l'une des revendications 1 à 8, dans lequel on produit le certificat (18,18a-18c) d'appareil dans un format de certificat donné à l'avance.

10. Dispositif (2) de sécurisation, qui est conçu pour produire un certificat (18,18a-18c) d'appareil spécifique à un appareil pour un appareil (1,1a-1c) couplé au dispositif (2) de sécurisation, comprenant :
un dispositif (4) de mise en mémoire de clés pour mettre en mémoire une clé (3) signée privée pouvant être utilisée une fois ;
un dispositif de production d'informations d'identification pour produire une information (21a-21c) d'identification spécifique à un appareil et
un dispositif (5) de mise en mémoire d'information d'identification pour mettre en mémoire une information (21a-21c) d'identification spécifique à un appareil et
un dispositif (6) de production de certificat pour la production du certificat (18,18a-18c) d'appareil en fonction de l'information (21a-21c) d'identification mise en mémoire et pour signer le certificat (18,18a-18c) d'appareil par la clé (3) signée privée lue dans le dispositif (4) de mise en mémoire de clés, dans lequel
le dispositif (2) de sécurisation est conçu pour interdire un autre accès à la clé (3) signée privée.

11. Dispositif (2) de sécurisation suivant la revendication 10, qui est propre à effectuer le procédé suivant l'une des revendications 1 à 9.

12. Système de sécurisation, comprenant le dispositif (2) de sécurisation suivant la revendication 10 ou 11 et un appareil, qui est conçu pour être couplé au dispositif (2) de sécurisation.
